(19) Europäisches Patentamt
European Patent Office
Office européen des brevets

(11) **EP 4 783 475 A1**

(12) **EUROPEAN PATENT APPLICATION**

(43) Date of publication:
29.07.2026 Bulletin 2026/31

(21) Application number: 26154571.9

(22) Date of filing: 27.01.2026

(51) International Patent Classification (IPC):
$H04B\ 7/0404^{(2017.01)}$ $\quad$ $H04B\ 7/0456^{(2017.01)}$
$H04B\ 7/08^{(2006.01)}$ $\quad$ $H04B\ 17/318^{(2015.01)}$
$H04L\ 25/02^{(2006.01)}$

(52) Cooperative Patent Classification (CPC):
H04B 7/0404; H04B 7/0469; H04B 7/0842;
H04B 7/0848; H04B 17/328; H04L 25/0204

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.01.2025 RO 202500027

(71) Applicant: NXP USA, Inc.
Austin, TX 78735 (US)

(72) Inventors:
• Srinivasan Babu, Balaji
5656AG Eindhoven (NL)
• Sethi, Ankit
5656AG Eindhoven (NL)
• Srinivasa, Sudhir
5656AG Eindhoven (NL)
• Stanciu, Mihai-Ionut
5656AG Eindhoven (NL)

(74) Representative: Schwarzweller, Thomas
NXP Semiconductors Germany GmbH
Intellectual Property Group
Beiersdorfstraße 12
22529 Hamburg (DE)

(54) **NONCOHERENT CHANNEL ESTIMATION FOR MULTI-ANTENNA SYSTEM**

(57) A receiver for a multi-antenna system and a method of generating channel estimations for the multi-antenna system are disclosed. In an embodiment, a receiver for a multi-antenna system comprises a detector configured to detect packets using signals received on a plurality of antennas, and a channel estimator configured to produce channel estimations based on the signals received on the plurality of antennas. The channel estimator is configured to estimate a relative channel with respect to first and second antenna using signals from first and second antennas to derive a relative channel estimation, estimate an antenna power for at least one of the first and second antennas using the signals from at least one of the first and second antennas, and compute channel estimations for the first and second antennas using the relative channel estimation and the antenna power for the at least one of the first and second antennas.

FIG. 1

**Description**

BACKGROUND

Multiple antennas are used in Bluetooth (BT) and ZigBee devices to combine the signals received on the multiple antennas to achieve more reliability, higher accuracy and better performance. However, during a preamble (or syncword) detection, the actual data and the timing of the received signals may not be known, which presents a challenge to properly combine the signals received on the multiple antennas.

One method to overcome this challenge is to estimate the power in the antennas and choose the best antenna during the preamble detection. This method works well, but may be suboptimal when compared to actually estimating the channel for each of the multiple antennas and then combining the signals received on the multiple antennas.

SUMMARY

A receiver for a multi-antenna system and a method of generating channel estimations for the multi-antenna system are disclosed. In an embodiment, a receiver for a multi-antenna system comprises a detector configured to detect packets using signals received on a plurality of antennas, and a channel estimator configured to produce channel estimations based on the signals received on the plurality of antennas. The channel estimator is configured to estimate a relative channel with respect to first and second antennas using signals from the first and second antennas to derive a relative channel estimation, estimate an antenna power for at least one of the first and second antennas using the signals from at least one of the first and second antennas, and compute channel estimations for the first and second antennas using the relative channel estimation and the antenna power for the at least one of the first and second antennas.

In an embodiment, the channel estimation for the first antenna equals the antenna power for the first antenna and the channel estimation for the second antenna equals the relative channel estimation.

In an embodiment, the channel estimator is configured to estimate an antenna power for each of the first and second antennas to derive first and second antenna power estimations for the first and second antennas.

**In** an embodiment, the channel estimator is configured to remove noise components from the first and second antenna power estimations using the relative channel estimation to derive relationships between the channel estimations for the first and second antennas and the antenna power estimations for the first and second antennas.

**In** an embodiment, the channel estimator is configured to compute the channel estimations for the first and second antennas based on the relationships between the channel estimations for the first and second antennas and the antenna power estimations of the first and second antennas.

**In** an embodiment, the channel estimator is configured to compute the channel estimation for the first antenna using:

$$\sqrt{\frac{1}{2} \times \left( -(p_1 - p_0) + \sqrt{(p_1 - p_0)^2 + 4p_{01}} \right)},$$

and the channel estimation for the second antenna using:

$$\sqrt{\frac{1}{2} \times \left( (p_1 - p_0) + \sqrt{(p_1 - p_0)^2 + 4p_{01}} \right)} \, e^{j\angle h_{rel}},$$

where $p_0$ is the antenna power estimation for the first antenna, $p_1$ is the antenna power estimation for the second antenna, $p_{01}$ is a power for both of the first and second antennas, and $e^{j\angle h_{rel}}$ is a relative angle of channel across the antennas.

In an embodiment, the channel estimator is further configured to compute enhanced channel estimations for the first and second antennas based on an approximate maximum likelihood channel estimation process using the channel estimations for the first and second antennas as initial estimations.

In an embodiment, the channel estimator is configured to compute the enhanced channel estimation for the first antenna using:

$$m_0 = (1 - \alpha)m_0 + \alpha \, y_{0,i} \, e^{-j\angle y_{comb,i}},$$

and the enhanced channel estimation for the second antenna using:

$$m_1 = (1 - \alpha)m_1 + \alpha\, y_{1,i}\, e^{-j\left(\angle y_{comb,i} + \angle h_{rel}\right)},$$

where $m_0$ is a magnitude of the enhanced channel estimation for the first antenna, $m_1$ is a magnitude of the enhanced channel estimation for the second antenna, $\alpha$ is a value between zero and one, $y_{0,i}$ is a signal $i$ on the first antenna, $y_{1,i}$ is a signal $i$ on the second antenna, $j$ is $\sqrt{-1}$, $y_{comb,i}$ is a combined signal of a signal $i$ on the first antenna and a signal $i$ on the second antenna, and $h_{rel}$ is the relative channel.

In an embodiment, the channel estimator is configured to compute the channel estimations for the first and second antennas until the end of an overlapping period after a packet is detected and starting the approximate maximum likelihood channel estimation process when the packet is detected.

In an embodiment, the channel estimator is configured to use a preamble, syncword or access code detection to determine that a packet is detected.

In an embodiment, a method of generating channel estimations for a multi-antenna system comprises estimating a relative channel with respect to first and second antennas using signals from the first and second antennas to derive a relative channel estimation, estimating an antenna power for at least one of the first and second antennas using the signals from at least one of the first and second antennas, and computing channel estimations for the first and second antennas using the relative channel estimation and the antenna power for the at least one of the first and second antennas.

In an embodiment, the channel estimation for the first antenna equals the antenna power for the first antenna and the channel estimation for the second antenna equals the relative channel estimation.

In an embodiment, estimating the antenna power for at least one of the first and second antennas includes estimating an antenna power for each of the first and second antennas to derive first and second antenna power estimations for the first and second antennas.

In an embodiment, the method further comprises removing noise components from the first and second antenna power estimations using the relative channel estimation to derive relationships between the channel estimations for the first and second antennas and the antenna power estimations for the first and second antennas.

In an embodiment, computing the channel estimations for the first and second antennas includes computing the channel estimations for the first and second antennas based on the relationships between the channel estimations for the first and second antennas and the antenna power estimations of the first and second antennas.

In an embodiment, computing the channel estimations for the first and second antennas includes computing the channel estimation for the first antenna using:

$$\sqrt{\frac{1}{2} \times \left(-(p_1 - p_0) + \sqrt{(p_1 - p_0)^2 + 4p_{01}}\right)},$$

and the channel estimation for the second antenna using:

$$\sqrt{\frac{1}{2} \times \left((p_1 - p_0) + \sqrt{(p_1 - p_0)^2 + 4p_{01}}\right)}\, e^{j\angle h_{rel}},$$

where $p_0$ is the antenna power estimation for the first antenna, $p_1$ is the antenna power estimation for the second antenna, $p_{01}$ is a power for both of the first and second antennas, and $e^{j\angle hrel}$ is a relative angle of channel across the antennas.

In an embodiment, the method further comprises computing enhanced channel estimations for the first and second antennas based on an approximate maximum likelihood channel estimation process using the channel estimations for the first and second antennas as initial estimations.

In an embodiment, computing the enhanced channel estimations for the first and second antennas includes computing the enhanced channel estimation for the first antenna using:

$$m_0 = (1 - \alpha)m_0 + \alpha\, y_{0,i}\, e^{-j\angle y_{comb,i}},$$

and the enhanced channel estimation for the second antenna using:

$$m_1 = (1 - \alpha)m_1 + \alpha\, y_{1,i}\, e^{-j\left(\angle y_{comb,i} + \angle h_{rel}\right)},$$

where $m_0$ is a magnitude of the enhanced channel estimation for the first antenna, $m_1$ is a magnitude of the enhanced channel estimation for the second antenna, $\alpha$ is a value between zero and one, $y_{0,i}$ is a signal $i$ on the first antenna, $y_{1,i}$ is a signal $i$ on the second antenna, $j$ is $\sqrt{-1}$, $y_{comb,i}$ is a combined signal of a signal $i$ on the first antenna and a signal $i$ on the second antenna, and $h_{rel}$ is the relative channel.

In an embodiment, computing the channel estimations for the first and second antennas is performed until the end of an overlapping period after a packet is detected and wherein the approximate maximum likelihood channel estimation process is started when the packet is detected.

In an embodiment, a receiver for a multi-antenna system in a Bluetooth or Zigbee device comprises a detector configured to detect packets using signals received on a plurality of antennas, and a channel estimator configured to produce channel estimations based on the signals received on the plurality of antennas, wherein timing and data information of the signals are unknown to the channel estimator. The channel estimator is configured to estimate a relative channel with respect to first and second antennas using signals from the first and second antennas to derive a relative channel estimation, estimate a power for each of the first and second antennas using the signals from the first and second antennas to derive antenna power estimations for the first and second antennas, remove noise components from the antenna power estimations to derive relationships between the channel estimations for the first and second antennas and the antenna power estimations for the first and second antennas, and compute channel estimations for the first and second antennas using the relationships between the channel estimations for the first and second antennas and the antenna power estimations for the first and second antennas.

These and other aspects in accordance with embodiments will become apparent from the following detailed description, taken in conjunction with the accompanying drawings, illustrated by way of example of the principles of the embodiments.

BRIEF DESCRIPTION OF THE DRAWINGS

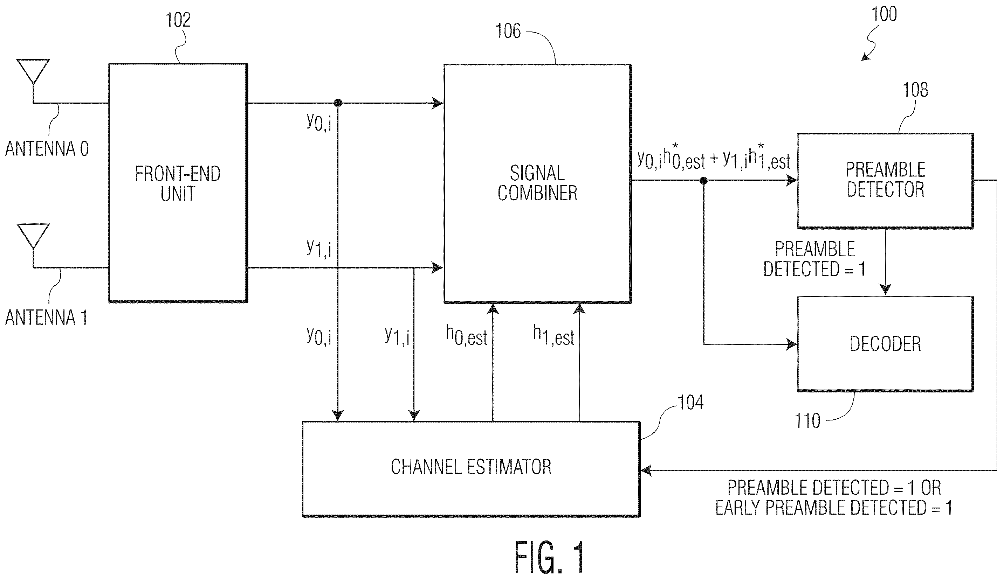

Fig. 1 is a diagram of a receiver of a multi-antenna communication system in accordance with an embodiment of the invention.

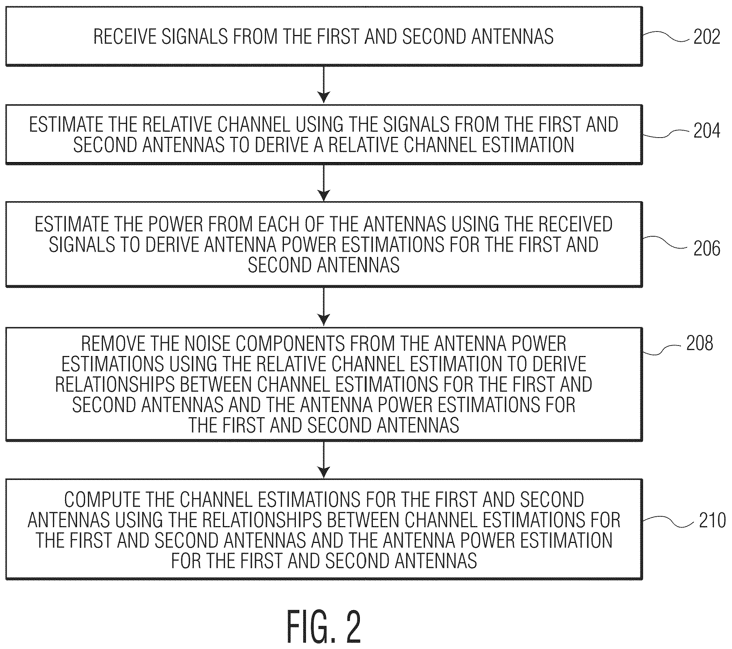

Fig. 2 is a flow diagram of a process of computing channel estimations for first and second antennas of the receiver in accordance with an embodiment of the invention.

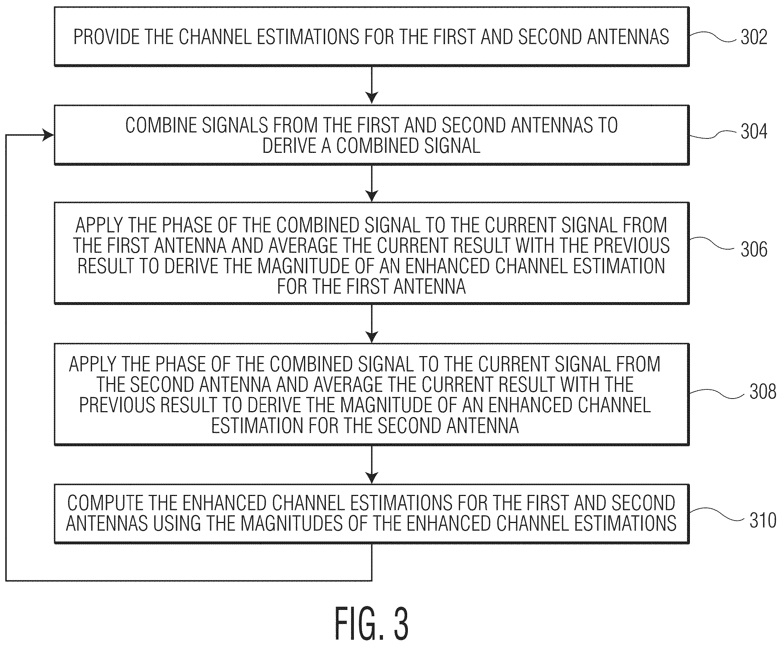

Fig. 3 is a flow diagram of an approximate maximum likelihood channel estimation process in accordance with an embodiment of the invention.

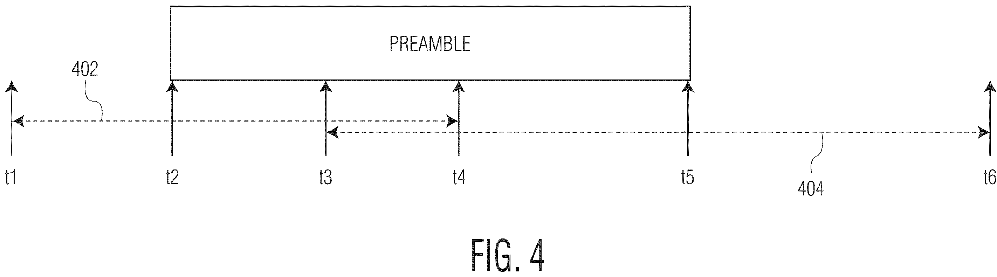

Fig. 4 is a timing diagram of a method of performing channel estimation using the channel estimation process of Fig. 2 and the approximate maximum likelihood channel estimation process of Fig. 3 based on early preamble detection in accordance with an embodiment of the invention.

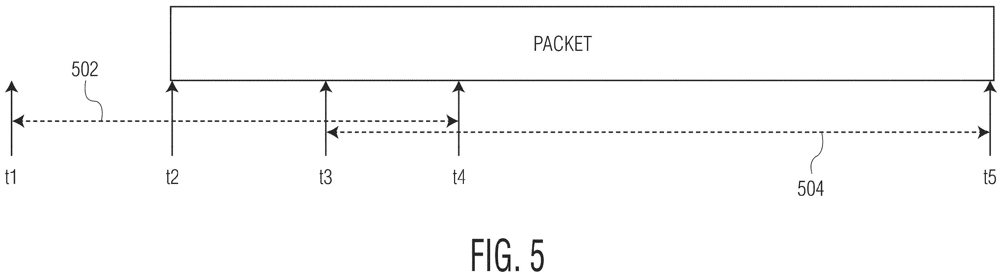

Fig. 5 is a timing diagram of a generalized method of performing channel estimation using the channel estimation process of Fig. 2 and the approximate maximum likelihood channel estimation process of Fig. 3 based on early packet detection in accordance with an embodiment of the invention.

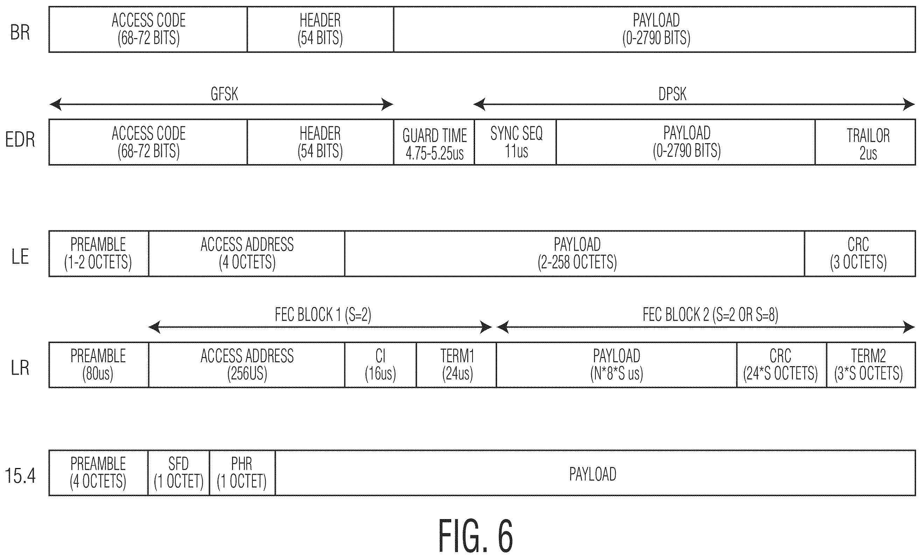

Fig. 6 shows different Bluetooth (BT) packets that can be used for the channel estimation method of Fig. 4 in accordance with various embodiments of the invention.

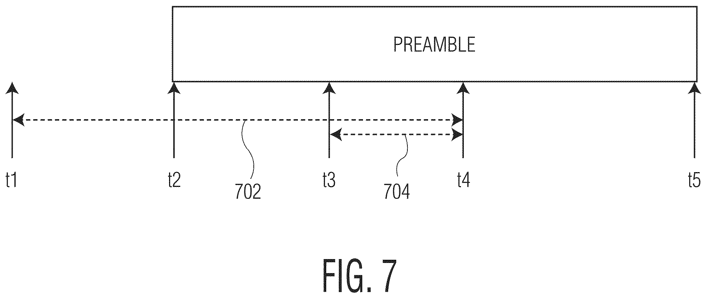

Fig. 7 is a timing diagram of a reference channel estimation method based on early preamble detection in accordance with an embodiment of the invention.

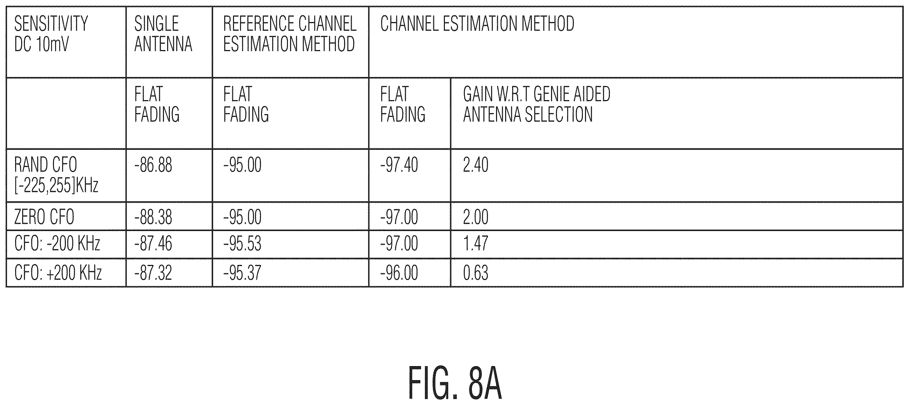

Fig. 8A is a table that shows gains of the channel estimation method of Fig. 4 with respect to the genie-aided antenna selection method, i.e., the reference channel estimation method of Fig. 7, for different CFOs from a simulation with ZigBee in channel using Rayleigh Flat fading in accordance with an embodiment of the invention.

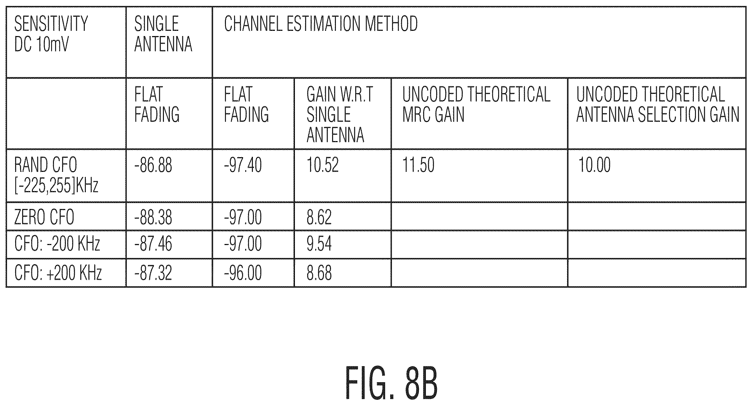

Fig. 8B is a table that shows gains of the channel estimation method of Fig. 4 with respect to a single antenna channel estimation method for different CFOs from a simulation with ZigBee in channel using Rayleigh Flat fading in accordance with an embodiment of the invention.

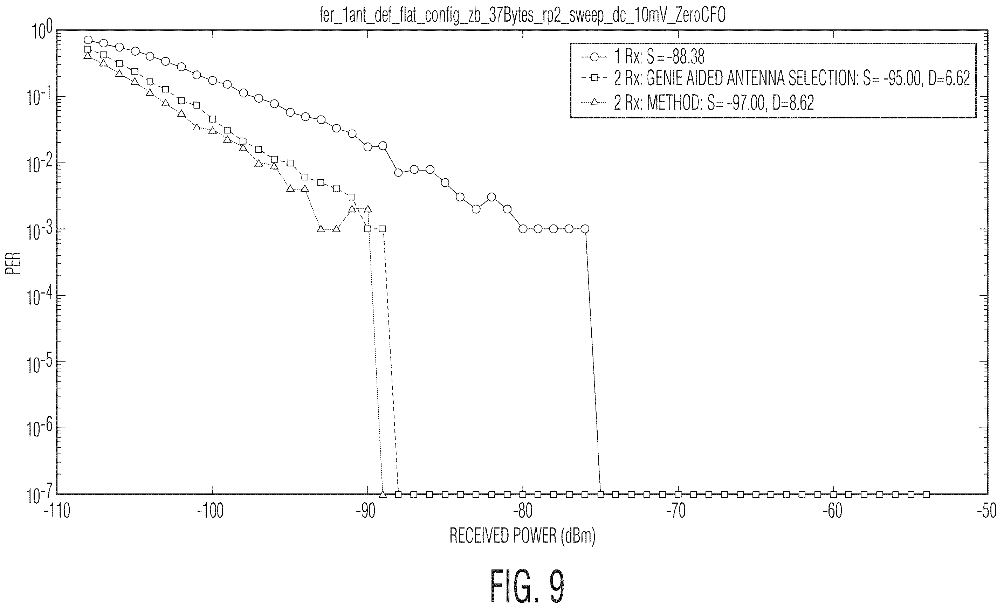

Fig. 9 is a graph that shows received power versus packet error rate (PER) for the channel estimation method of Fig. 4, the single antenna channel estimation method, and the genie-aided antenna selection method for zero CFO from a simulation with ZigBee in channel using Rayleigh Flat fading in accordance with an embodiment of the invention.

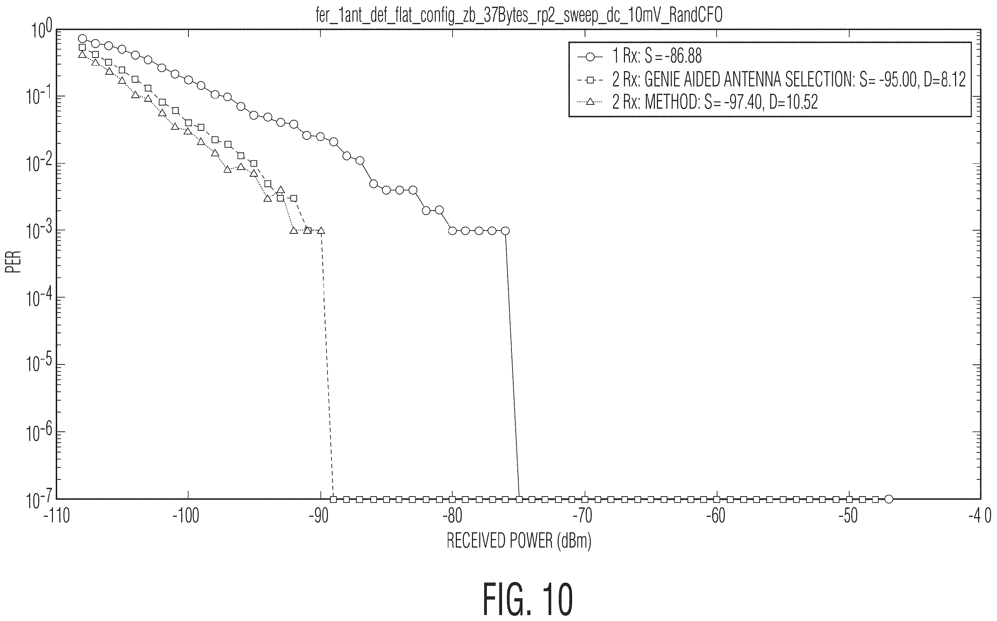

Fig. 10 is a graph that shows received power versus PER for the channel estimation method of Fig. 4, the single antenna channel estimation method, and the genie-aided antenna selection method for random CFO from a simulation with ZigBee in channel using Rayleigh Flat fading in accordance with an embodiment of the invention.

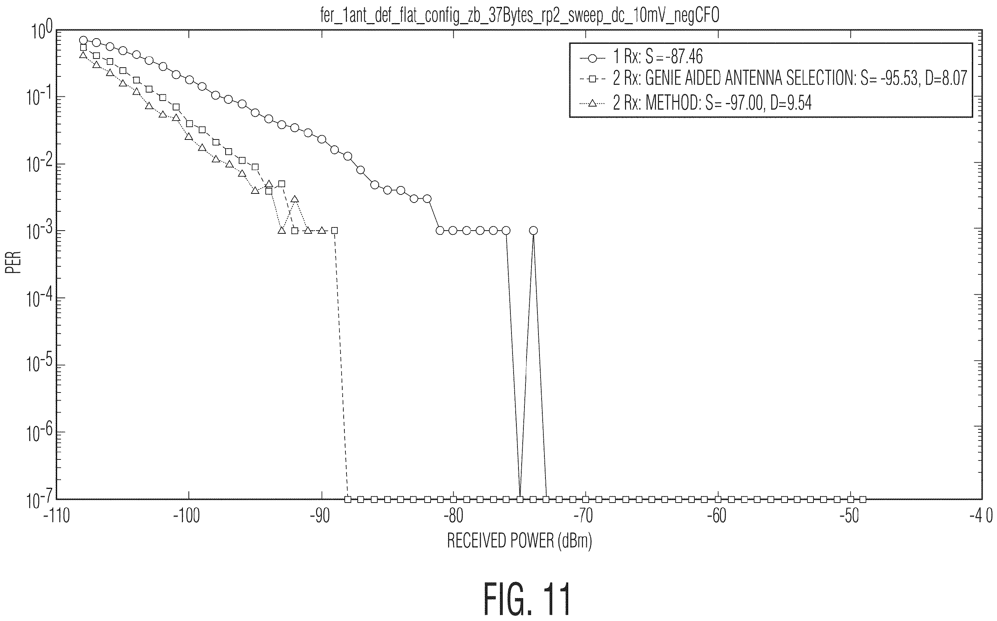

Fig. 11 is a graph that shows received power versus PER for the channel estimation method of Fig. 4, the single antenna channel estimation method, and the genie-aided antenna selection method for -200 Kilohertz (KHz) CFO from a simulation with ZigBee in channel using Rayleigh Flat fading in accordance with an embodiment of the invention.

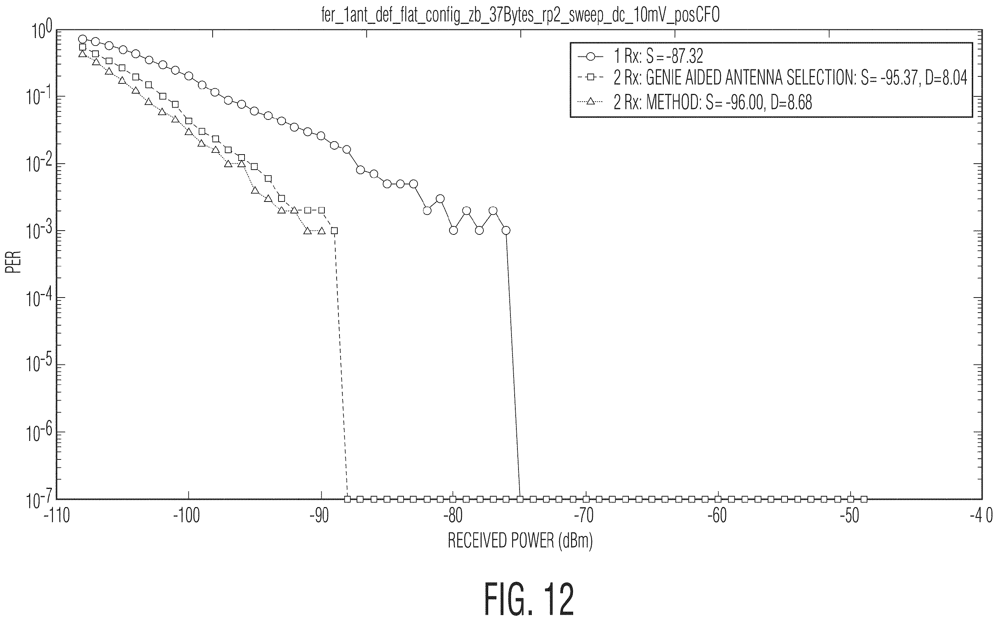

Fig. 12 is a graph that shows received power versus PER for the channel estimation method of Fig. 4, the single antenna channel estimation method, and the genie-aided antenna selection method for +200 KHz CFO from a simulation with ZigBee in channel using Rayleigh Flat fading in accordance with an embodiment of the invention.

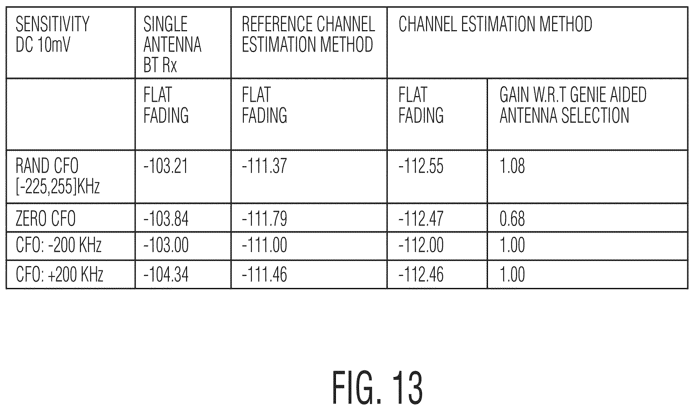

Fig. 13 is a table that shows gains of the channel estimation method of Fig. 4 with respect to the genie-aided antenna selection method, i.e., the reference channel estimation method of Fig. 7, for different CFOs from a simulation using ZigBee in channel and DNLOS (not normalized to be unit power) in accordance with an embodiment of the invention.

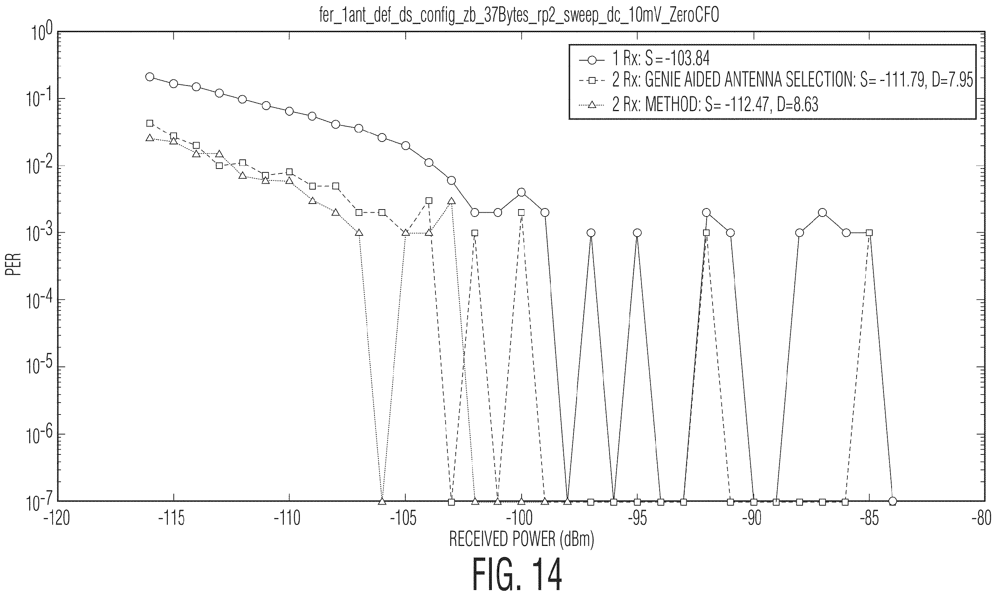

Fig. 14 is a graph that shows received power versus PER for the channel estimation method of Fig. 4, the single antenna channel estimation method, and the genie-aided antenna selection method for zero CFO from a simulation using ZigBee in channel and DNLOS (not normalized to be unit power) in accordance with an embodiment of the invention.

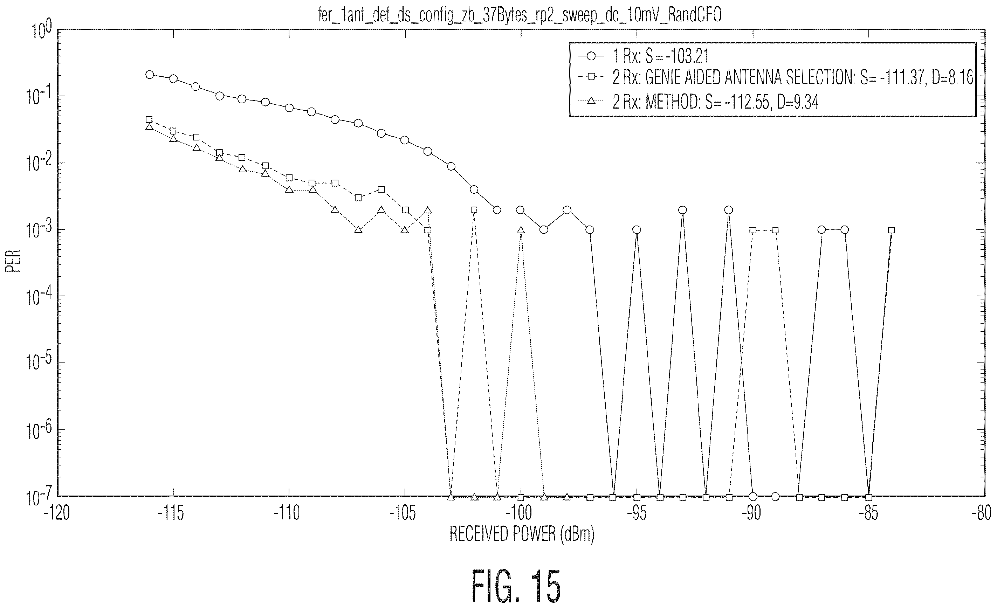

Fig. 15 is a graph that shows received power versus PER for the channel estimation method of Fig. 4, the single antenna channel estimation method, and the genie-aided antenna selection method for random CFO from a simulation using ZigBee in channel and DNLOS (not normalized to be unit power) in accordance with an embodiment of the invention.

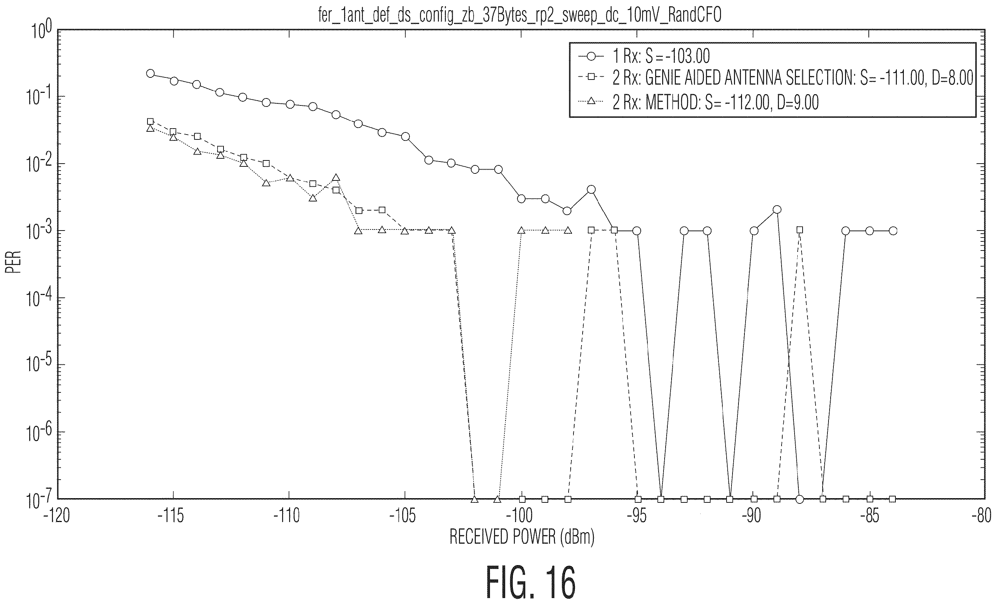

Fig. 16 is a graph that shows received power versus PER for the channel estimation method of Fig. 4, the single antenna channel estimation method, and the genie-aided antenna selection method for -200 KHz CFO from a simulation using ZigBee in channel and DNLOS (not normalized to be unit power) in accordance with an embodiment of the invention.

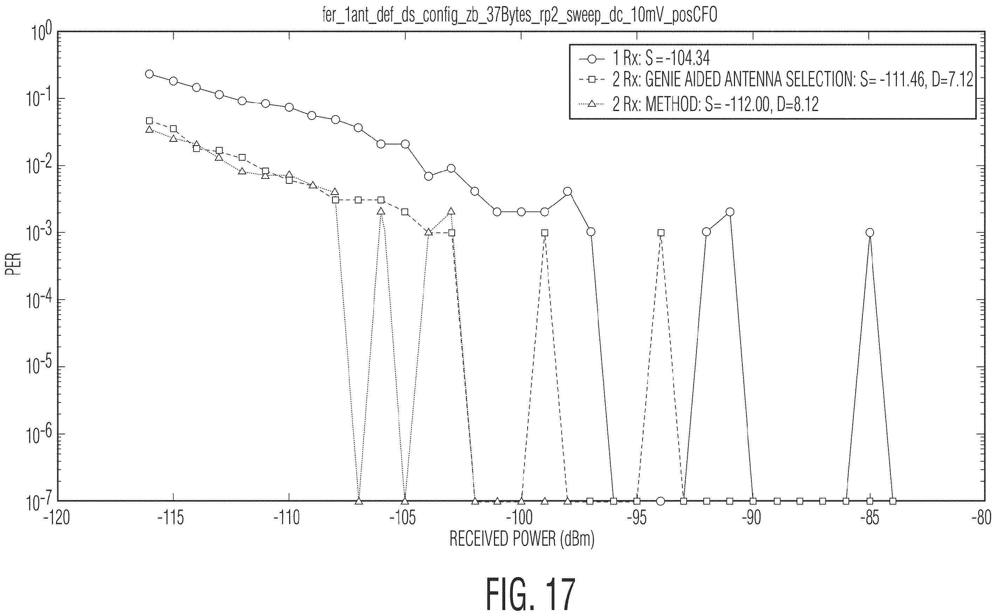

Fig. 17 is a graph that shows received power versus PER for the channel estimation method of Fig. 4, the single antenna channel estimation method, and the genie-aided antenna selection method for +200 KHz CFO from a simulation using ZigBee in channel and DNLOS (not normalized to be unit power) in accordance with an embodiment of the invention.

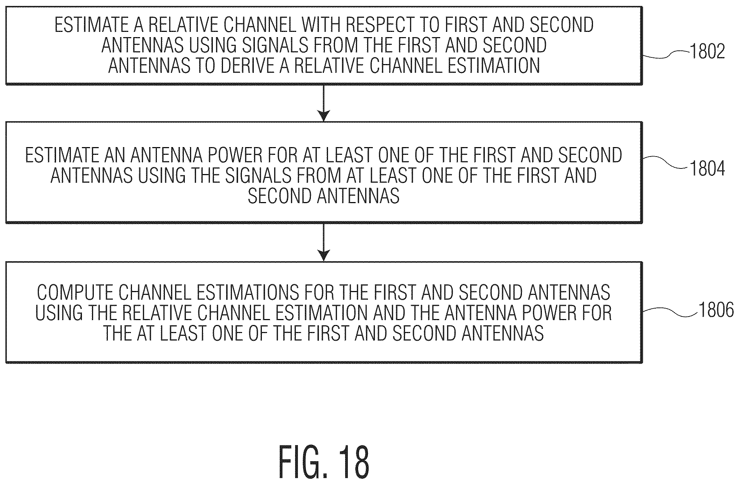

Fig. 18 is a process flow diagram of a method of generating channel estimations for a multi-antenna system in accordance with an embodiment of the invention.

Throughout the description, similar reference numbers may be used to identify similar elements.

DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

As used herein, the term "coupled" or "connected" includes directly coupled or directly connected so that one element is directly coupled or connected to another element, and indirectly coupled or indirectly connected so that one element is indirectly coupled or connected to another element, i.e., one or more elements may be present between the coupled or connected elements.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

Turning now to Fig. 1, a receiver 100 for a multi-antenna communication system in accordance with an embodiment of the invention is shown. The multi-antenna communication system may be any wireless system in a device, such as a Bluetooth or ZigBee device. In the illustrated embodiment, the receiver 100 is shown to include two (2) antennas, a first antenna ("antenna 0") and a second antenna ("antenna 1"). However, in other embodiments, the receiver 100 may include more than two (2) antennas. The receiver 100 is designed to use the signals received on the two antennas in order to achieve more reliability, higher accuracy and better performance than single antenna receivers by estimating the channels for the two antennas, which may be antennas in a Bluetooth or ZigBee device.

As shown in Fig. 1, the receiver 100 further includes a front-end unit 102, a channel estimator 104, a signal combiner 106, a preamble detector 108 and a decoder 110. These components of the receiver 100 may be implemented in software, hardware or a combination of software and hardware. In some embodiments, some or all of these components may be integrated in one or more system-on-chips (SoCs).

The front-end unit 102 operates to receive radio frequency (RF) signals on the two antennas and converts the RF signals to digital signals. The front-end unit 102 may be a standard Bluetooth or Zigbee receiver module that performs low-noise amplification, filtering and down-conversion, analog-to-digital conversion, demodulation and/or error correction. In an embodiment, the timing information and data information of the RF signals received on the first and second antennas are unknown.

The outputs of the front-end unit102 are digital signals $y_{0,i}$, which are digitized signals of the RF signals received on the first antenna, and digital signals $y_{1,i}$, which are digitized signals of the RF signals received on the second antenna.

The channel estimator 104 operates to estimate the channels for the signals received on the first and second antennas. The channel estimator 104 performs non-coherent channel estimation since the timing information and data information of the signals received on the first and second antennas are unknown. In operation, the channel estimator 104 receives the signals $y_{0,i}$ and $y_{1,i}$ that represent signals on the first and second antennas and computes a channel estimation $h_{0,est}$ for the signals received on the first antenna and a channel estimation $h_{1,est}$ for the signals received on the second antenna. The channel estimation method performed by the channel estimator 104 is described in detail below.

The signal combiner 106 operates to combine the signals from the first and second antennas using the channel estimations computed by the channel estimator 104. In particular, the signal combiner 106 receives the signals $y_{0,i}$ and $y_{1,i}$ that represent signals on the first and second antennas and then multiplies the signal $y_{0,i}$ with the conjugate of the channel estimation $h_{0,est}$ for the first antenna and the signal $y_{1,i}$ with the conjugate of the channel estimation $h_{1,est}$ for the second antenna. The products of the multiplication operations are combined to produce combined signals $y_{0,i}h_{0,est}^* + y_1 h_{1,est}^*$ , which are transmitted to the preamble detector 108 and the decoder 110.

The preamble detector 108 operates to process the combined signals from the signal combiner 106 to detect preambles of packets, which may be Bluetooth or ZigBee packets, including uncoded Bluetooth packets. The preamble detector 108 may perform an early preamble detection using one or more known preamble detection techniques. As an example, an early preamble may be detected when a preamble correlation is greater than $\alpha$ times a preamble detection threshold, and the preamble correlation is at a local peak with respect to time, where $\alpha$ is an early detection factor. When a preamble is detected by the preamble detector 108 using either the early preamble detection process or the standard preamble detection process, a notification may be transmitted to the channel estimator 104 and the decoder 110. The notification may simply be a "1" bit, as illustrated in Fig. 1, or alternatively, a "0" bit. As described below, the notification of early preamble detection or standard preamble detection may be used by the channel estimator 104 to compute the channel estimations for the signals received on the first and second antennas.

The decoder 110 operates to decode the data contained in the combined signal from the signal combiner 106. Thus, after a preamble is detected by receiving the notification from the preamble detector 108, the combined signals $y_{0,i}h_{0,est}^* + y_1 h_{1,est}^*$ from the signal combiner 106 are decoded by the decoder 110.

A non-coherent channel estimation method, which may involve first and second processes, performed by the channel estimator 104 in accordance with an embodiment of the invention is now described. The signal $i$ received at the antenna $k$ can be expressed as:

$$y_{k,i} = e^{j\theta_i} h_k x_i + n_{k,i}, \qquad\qquad\qquad (\text{Equation 1})$$

where $x_i$ is the data, $h_k$ is the channel of the antenna $k$, $n_{k,i}$ is the noise, and $\theta_i$ is the carrier frequency offset (CFO) angle. In an embodiment, an independent Automatic Gain Control (AGC) is used for each of the antennas. Thus, the channel estimate for the antenna 1 and the received signal are scaled by relative AGC scaling relative to the channel estimate for the antenna 2. However, this AGC scaling is not explicitly mentioned herein to more clearly describe the inventive features.

The first process executed by the channel estimator 104 is a process of computing channel estimations for the first and second antennas (i.e., the antenna 0 and the antenna 1) in accordance with an embodiment of the invention, which is described with reference to the flow diagram of Fig. 2. At step 202, signals from the first and second antennas of the receiver 100 are received at the channel estimator 104 via the front-end unit 102. These signals can be mathematically expressed using the Equation 1.

At step 204, the relative channel of the first and second antennas is estimated by the channel estimator 104 using the received signals from the first and second antennas to derive a relative channel estimation. As used herein, the relative channel with respect to the first and second antennas is a relative phase of complex channel coefficients of the first and second antennas. In an embodiment, the relative channel $h_{rel}$ can be expressed as:

$$h_{rel} = (1 - \alpha)h_{rel} + \alpha y_{0,i}^* y_{1,i}, \qquad \text{(Equation 2)}$$

where $y_{0,i}^*$ is the conjugate of the signal $y_{0,i}$ and $\alpha$ is an iteration constant, which can be any value between zero (0) and (1), i.e., $0 < \alpha < 1$.

At step 206, the power for each of the antennas is estimated by the channel estimator 104 using the received signals from the first and second antennas to derive antenna power estimations for the first and second antennas. In an embodiment, the power estimation $p_k$ for the antenna $k$ can be expressed as:

$$p_k = (1 - \alpha)p_k + \alpha |y_{k,i}|^2. \qquad \text{(Equation 3)}$$

The equation 3 can be estimated as follows:

$$p_k \approx |h_k|^2 + \sigma^2, \qquad \text{(Equation 4)}$$

where $\sigma^2$ is the noise power or noise component of the antenna power.

At step 208, the noise components are removed from the antenna power estimations by the channel estimator 104 using the relative channel estimation to derive relationships between channel estimations for the first and second antennas and the antenna power estimations for the first and second antennas. In an embodiment, the noise components are removed from the antenna power estimations for the first and second antennas by using two equations. The first equation involves the estimated power of the second antenna minus the estimated power of the first antenna, which removes the noise power since the noise power is not dependent on the antenna. This can be expressed as:

$$p_1 - p_0 \approx |h_1|^2 - |h_0|^2. \qquad \text{(Equation 5)}$$

The second equation involves the relative power of both the first and second antennas, which equals the absolute value of the relative channel estimation squared, i.e., $|h_{rel}|^2$. This term is approximately the absolute value of the channel of the first antenna squared times the absolute value of the channel of the second antenna squared, which can be expressed as:

$$p_{01} = |h_{rel}|^2 \approx |h_0|^2 |h_1|^2. \qquad \text{(Equation 6)}$$

Since $p_1 - p_0$ and $p_{01}$ are known, an estimated value of the absolute value of the channel $|h_0|$ squared, or $|h_0|^2_{est}$, and an estimated value of the absolute value of the channel $|h_1|$ squared, or $|h_1|^2_{est}$, can be derived using the equations 5 and 6. The resulting equations are:

$$|h_0|^2_{est} \approx \frac{1}{2} \times \left(-(p_1 - p_0) + \sqrt{(p_1 - p_0)^2 + 4p_{01}}\right), \text{ and} \qquad \text{(Equation 7)}$$

$$|h_1|^2_{est} \approx \frac{1}{2} \times \left((p_1 - p_0) + \sqrt{(p_1 - p_0)^2 + 4p_{01}}\right), \qquad \text{(Equation 8)}$$

which show the relationships between the channel estimations for the first and second antennas and the antenna power estimations for the first and second antennas.

At step 210, the channel estimations for the first and second antennas are computed by the channel estimator 104 using the relationships between channel estimations for the first and second antennas and the antenna power estimations for the first and second antennas. In an embodiment, the channel estimations for the first and second antennas are computed using the equations 7 and 8 to derive the channel estimation $h_{0,est}$ for the first antenna and the channel estimation $h_{1,est}$ for the second antenna. These channel estimations for the first and second antennas can be expressed

as:

$$h_{0,est} = \sqrt{|h_0|_{est}^2} \approx$$
$$\sqrt{\frac{1}{2} \times \left(-(p_1 - p_0) + \sqrt{(p_1 - p_0)^2 + 4p_{01}}\right)}, \text{ and} \qquad \text{(Equation 9)}$$

$$h_{1,est} = \sqrt{|h_1|_{est}^2} e^{j \angle h_{rel}} \approx$$
$$\sqrt{\frac{1}{2} \times \left((p_1 - p_0) + \sqrt{(p_1 - p_0)^2 + 4p_{01}}\right)} e^{j \angle h_{rel}}, \qquad \text{(Equation 10)}$$

where $e^{j \angle h_{rel}}$ is the relative angle of channel across antennas needed for coherent combining of signal across antennas.

The resulting channel estimations for the first and second antennas derived using the channel estimation process may be further enhanced or optimized using a maximum likelihood channel estimation process. Although this optimized estimation process is described herein using signals from two (2) antennas, the method may be extended to any number of antennas.

The maximum likelihood channel estimation process begins with initial channel estimates $h_{0,est}$ and $h_{1,est}$ for the first and second antennas. In an embodiment, these channel estimates may be the same channel estimates derived using the channel estimation process of Fig. 2. However, in other embodiments, these channel estimates may be derived using any channel estimation process, which may be different than the channel estimates derived using the channel estimation process of Fig. 2.

These initial channel estimates are then improved iteratively by solving the following expression:

$$h_{0,est,ML}, h_{1,est,ML} := \underset{h_0,h_1}{\operatorname{argmin}} \ \underset{\theta_i,x_i}{\min} \sum_i \left(\left|y_{0i} - e^{j\theta_i} h_0 x_i\right|^2 + \left|y_{1i} - e^{j\theta_i} h_1 x_i\right|^2\right),$$

$$\text{(Expression 1)}$$

where $h_{0,est,ML}$ is the maximum likelihood channel estimate for the first antenna, $h_{1,est,ML}$ is the maximum likelihood channel estimate for the second antenna, j is $\sqrt{-1}$, and $\left|y_{0i} - e^{j\theta_i} h_0 x_i\right|^2 + \left|y_{1i} - e^{j\theta_i} h_1 x_i\right|^2$ is the Euclidian distance between the signals received at the first and second antennas and the corresponding ideal signals.

Once the expression 1 is solved, the results are the following equations:

$$h_{0,est,ML} = \sum_i y_{0,i} \ e^{j \angle \left(y_{0,i}^* h_{0,est,ML} + y_{1,i}^* h_{1,est,ML}\right)}, \text{ and} \qquad \text{(Equation 11)}$$

$$h_{1,est,ML} = \sum_i y_{1,i} \ e^{j \angle \left(y_{0,i}^* h_{0,est,ML} + y_{1,i}^* h_{1,est,ML}\right)}. \qquad \text{(Equation 12)}$$

The optimization problem is solved by taking the best case $x_i$, $\theta_i$ and taking the resulting expression and differentiating with respect to $h_0$, $h_1$ and equating to zero (0).

In the above description, $x_i$ is assumed to be a constant envelope signal or $x_i = e^{j\phi}$ for some $\phi$ and no magnitude distortion in $x_i$ due to filtering is assumed.

This maximum likelihood channel estimation process may be approximated for practical implementation. An approximate maximum likelihood channel estimation process, which is performed by the channel estimator 104, in accordance with an embodiment of the invention is now described with reference to a flow diagram of Fig. 3. As shown in Fig. 3, the process begins at step 302, where the channel estimations for the first and second antennas are provided to the channel estimator 104. These channel estimations for the first and second antennas may be the same channel estimations for the first and second antennas that were computed by the channel estimation process of Fig. 2, i.e., the channel estimation $h_{0,est}$ for the first antenna (equation 9) and the channel estimation $h_{1,est}$ for the second antenna (equation 10).

Next, at step 304, signals from the first and second antennas are combined by the channel estimator 104 to derive a combined signal. In an embodiment, the combined signal may be expressed as:

$$y_{comb,i} = y_{0,i}^* h_{0,est} + y_{1,i}^* h_{1,est}, \qquad \text{(Equation 13)}$$

where $y_{0,i}^*$ is a conjugate of $y_{0,i}$ and $y_{1,i}^*$ is a conjugate of $y_{1,i}$.

Next, at step 306, the phase of the combined signal is applied to the current signal from the first antenna and the current result is averaged with the previous result by the channel estimator 104 to derive the magnitude of an enhanced channel estimation for the first antenna. In an embodiment, the magnitude $m_0$ of the enhanced channel estimation for the first antenna may be derived using the following equation:

$$m_0 = (1 - \alpha)m_0 + \alpha\, y_{0,i}\, e^{-j\angle y_{comb,i}}. \qquad \text{(Equation 14)}$$

Next, at step 308, the phase of the combined signal is applied to the current signal from the second antenna and the current result is averaged with the previous result by the channel estimator 104 to derive the magnitude of an enhanced channel estimation for the second antenna. In an embodiment, the magnitude $m_1$ of the enhanced channel estimation for the second antenna may be derived using the following equation:

$$m_1 = (1 - \alpha)m_1 + \alpha\, y_{1,i}\, e^{-j(\angle y_{comb,i}+\angle h_{rel})}. \qquad \text{(Equation 15)}$$

Next, at step 310, the enhanced channel estimations for the first and second antennas are computed by the channel estimator 104 using the magnitudes of the enhanced channel estimations for the first and second antennas. It is noted here that for the channel estimations for the first and second antennas that were computed by the channel estimation process of Fig. 2, $y_{comb,i}$ has a phase equal to data phase and phase of $h_0$ approximately. Therefore, each of the magnitudes of the enhanced channel estimations for the first and second antennas is equal to the absolute value of its respective channel estimation, or $m_0 \approx |h_0|$ and $m_1 \approx |h_1|$. Thus, the enhanced channel estimation (or the approximate maximum likelihood channel estimation) for the first antenna can be expressed as:

$$h_{0,est} = m_0. \qquad \text{(Equation 16)}$$

Similarly, the enhanced channel estimation (or the approximate maximum likelihood channel estimation) for the second antenna can be expressed as:

$$h_{1,est} = m_1 e^{j\angle h_{rel}}, \qquad \text{(Equation 17)}$$

where $e^{j\angle h_{rel}}$ is the relative angle of channel across antennas needed for coherent combining of signal across antennas.

A method of performing channel estimation using the channel estimation process of Fig. 2 and the approximate maximum likelihood channel estimation process of Fig. 3 based on early preamble detection in accordance with an embodiment of the invention is described with reference to Fig. 4, which is a timing diagram for the method. The method begins at t=t1, which coincides with the start of signal reception by the receiver 100. At t=t1, the channel estimation process of Fig. 2 is started by the channel estimator 104. In addition, at t=t1, the combining process is started by the signal combiner 106.

At t=t2, the preamble is received by the receiver 100. At t=t3, an early preamble detection is notified by the preamble detector 108. In addition, at t=t3, the approximate maximum likelihood channel estimation process of Fig. 3 is started by the channel estimator 104.

At t=t4, the channel estimation process of Fig. 2 is stopped. Thus, the channel estimation process of Fig. 2 is performed during a duration 402, which begins from t=t1 (at the start of signal reception) until t=t4 (after the early preamble detection and after an overlapping period from t3 to t4).

At t=t5, the end of the preamble is received by the receiver 100. At t=t6, the approximate maximum likelihood channel estimation process of Fig. 3 is stopped. The moment t=t6 also coincides with the end of the packet. Thus, the approximate maximum likelihood channel estimation process of Fig. 3 is performed during a duration 404, which begins from t=t3 (at the early preamble detection) until t=t6 (at the end of the packet). The overlapping period (i.e., t3 to t4) allows the approximate maximum likelihood channel estimation process of Fig. 3 to settle. The channel estimation process of Fig. 2 is used by the receiver 100 until t=t4, which is when the approximate maximum likelihood channel estimation process of Fig. 3 is used by the receiver.

Although early preamble detection may be used to start the approximate maximum likelihood channel estimation process of Fig. 3, as described above, in other embodiments, any early packet detection, whether related to a preamble or not, may be used to start the overlapping period. As an example, an early packet detection may be performed by may be detected when a field-in-the-packet correlation is greater than $\alpha$ times a field-in-the-packet detection threshold, and the field-in-the-packet correlation is at a local peak with respect to time, where $\alpha$ is an early detection factor. The general idea is to use the channel estimation process of Fig. 2 until a certain point in time when it is sure that the packet has started and then switch to the approximate maximum likelihood channel estimation process of Fig. 3. Thus, a detection of any field of a packet, such as a syncword or access code may be used instead of a preamble detection. The resulting enhanced or optimized channel estimations from the approximate maximum likelihood channel estimation process are used after the overlapping period.

A generalized method of performing channel estimation using the channel estimation process of Fig. 2 and the approximate maximum likelihood channel estimation process of Fig. 3 based on early packet detection in accordance with an embodiment of the invention is described with reference to Fig. 5. The generalized method begins at t=t1, which coincides with the start of signal reception by the receiver 100. At t=t1, the channel estimation process of Fig. 2 is started by the channel estimator 104. In addition, at t=t1, the combining process is started by the signal combiner 106.

At t=t2, the packet is received by the receiver 100. At t=t3, an early packet detection is notified by the preamble detector 108 or another detector in the receiver 100. In addition, at t=t3, the approximate maximum likelihood channel estimation process of Fig. 3 is started by the channel estimator 104 since now it is sure that the packet has started.

At t=t4, the channel estimation process of Fig. 2 is stopped. Thus, the channel estimation process of Fig. 2 is performed during a duration 502, which begins from t=t1 (at the start of signal reception) until t=t4 (after the early preamble detection and after an overlapping period from t3 to t4).

At t=t5, the approximate maximum likelihood channel estimation process of Fig. 3 is stopped. The moment t=t5 also coincides with the end of the packet. Thus, the approximate maximum likelihood channel estimation process of Fig. 3 is performed during a duration 504, which begins from t=t3 (at the early packet detection) until t=t5 (at the end of the packet). The overlapping period, i.e., t3 to t4, allows the approximate maximum likelihood channel estimation process of Fig. 3 to settle. The channel estimation process of Fig. 2 is used by the receiver 100 until t=t4, which is when the approximate maximum likelihood channel estimation process of Fig. 3 is used by the receiver 100.

Technically, the generalized method works irrespective of the time of early packet detection. In order to be practically useful, early packet detection should occur within the preamble or at the end of the preamble. In some embodiments, early packet detection may be performed using a reduced threshold for preamble correlation.

Turning now to Fig. 6, different Bluetooth (BT) packets that can be used for the channel estimation method in accordance with various embodiments of the invention. As shown in Fig. 6, the BT packets include a Basic Rate (BR) packet, an Enhanced Data Rate (EDR) packet, a Low Energy (LE) packet, a Long Range (LR) packet and 15.4 packet. For BR and EDR packet, early access code detection can be used as early packet detection. For LE, LR and 15.4 packets, middle or end of preamble detection can be used as early packet detection. Thus, even uncoded BT packets may be used for the channel estimation method in accordance with various embodiments of the invention. In addition, various Zigbee packets may also be used for the channel estimation method in accordance with various embodiments of the invention.

A reference channel estimation method for evaluation in accordance with an embodiment of the invention is now described. In this method, a genie-aided antenna selection is used until the overlapping period after an early preamble detection. In this embodiment, an early preamble detection is used. However, any early packet detection may be used instead of an early preamble detection. In this embodiment, a genie-aided antenna selection involves selecting the antenna which has a higher channel magnitude given a genie-aided channel magnitude.

During the overlapping period after the early preamble detection, a reference channel estimation process is performed. This reference channel estimation process is now described. Initially, a relative channel of the first and second antenna is estimated by the channel estimator 104 using the received signals from the first and second antennas to derive a relative channel estimation. In an embodiment, the relative channel $h_{rel}$ can be estimated using the equation 2. In addition, the power for the first antenna is estimated by the channel estimator 104 using the received signals from the first antenna to derive the power estimation for the first antenna. In an embodiment, the power estimation $p_0$ for the first antenna (i.e., the antenna 0) can be estimated using the equation 3. Next, the channel estimations for the first and second antennas are computed by the channel estimator 104 from the estimated relative channel and the power estimation of the first antenna. In an embodiment, the channel estimation for the first antenna is computed using the following equation:

$$h_{0,est} = p_0. \qquad \text{(Equation 18)}$$

The channel estimation for the second antenna is computed using the following equation:

$$h_{1,est} = h_{rel}. \qquad \text{(Equation 19)}$$

The reference channel estimation method is further described with reference to Fig. 7, which is a timing diagram for the method. The reference method begins at t=t1, which coincides with the start of signal reception by the receiver 100. At t=t1, the genie-aided antenna selection is started by the channel estimator 104. In addition, at t=t1, the combining process is started by the signal combiner 106.

At t=t2, the preamble is received by the receiver 100. At t=t3, an early preamble detection is notified by the preamble detector 108. In addition, at t=t3, the reference channel estimation process is started by the channel estimator 104.

At t=t4, the genie-aided antenna selection process is stopped. Thus, the genie-aided antenna selection process is performed during a duration 702, which begins from t=t1 (at the start of signal reception) until t=t4 (after the early preamble detection and after an overlapping period from t3 to t4). In addition, at t=t4, the reference channel estimation process is stopped and the latest channel estimations of the reference channel estimation process are used by the receiver 100. Thus, the reference channel estimation process is performed during a duration 704, which begins at t=t3 until t=t4.

At t=t5, the end of the preamble is received by the receiver. However, the reference channel estimation process has already stopped at this point in time.

It is noted here that, for this reference channel estimation method, the reference channel estimation process is stopped at t=t4, i.e., after the overlapping period. In contrast, for the channel estimation method of Fig. 4, the approximate maximum likelihood channel estimation process is performed until the end of the packet. However, the approximate maximum likelihood channel estimation process may be stopped after the overlapping period and still achieve good results. In addition, similar to the channel estimation method of Fig. 4, the reference channel estimation method may use any early packet detection, instead of an early preamble detection.

Simulation results of the channel estimation method of Fig. 4 are now described. In this simulation, a ZigBee packets were used, although the method works for all packet types. The following parameters were used for the simulation:

(1) Number of channels averaged over: 1000,
(2) Received signal strength indicator (RSSI) step size: 1 dB,
(3) CFO assumed exactly same across both antennas/Rx paths,
(4) Channel: Rayleigh fading channel and Channel D - Non Line of Sight (DNLOS) channel from IEEE channel models (independent fading in the two (2) antennas),
(5) DNLOS channel is not normalized to be unit power, and
(6) Independent AGC is used across the two (2) antennas.

Fig. 8A is a table that shows gains of the channel estimation method of Fig. 4 with respect to the genie-aided antenna selection method, i.e., the reference channel estimation method of Fig. 7, for different CFOs from a simulation with ZigBee in channel using Rayleigh Flat fading..

Fig. 8B is a table that shows gains of the channel estimation method of Fig. 4 with respect to a single antenna channel estimation method for different CFOs from a simulation with ZigBee in channel using Rayleigh Flat fading.

Fig. 9 is a graph that shows received power versus packet error rate (PER) for the channel estimation method of Fig. 4, the single antenna channel estimation method, and the genie-aided antenna selection method for zero CFO from a simulation with ZigBee in channel using Rayleigh Flat fading.

Fig. 10 is a graph that shows received power versus PER for the channel estimation method of Fig. 4, the single antenna channel estimation method, and the genie-aided antenna selection method for random CFO from a simulation with ZigBee in channel using Rayleigh Flat fading.

Fig. 11 is a graph that shows received power versus PER for the channel estimation method of Fig. 4, the single antenna channel estimation method, and the genie-aided antenna selection method for -200 KHz CFO from a simulation with ZigBee in channel using Rayleigh Flat fading.

Fig. 12 is a graph that shows received power versus PER for the channel estimation method of Fig. 4, the single antenna channel estimation method, and the genie-aided antenna selection method for +200 KHz CFO from a simulation with ZigBee in channel using Rayleigh Flat fading.

Fig. 13 is a table that shows gains of the channel estimation method of Fig. 4 with respect to the genie-aided antenna selection method, i.e., the reference channel estimation method of Fig. 7, for different CFOs from a simulation using ZigBee in channel and DNLOS (not normalized to be unit power).

Fig. 14 is a graph that shows received power versus PER for the channel estimation method of Fig. 4, the single antenna channel estimation method, and the genie-aided antenna selection method for zero CFO from a simulation using ZigBee in channel and DNLOS (not normalized to be unit power).

Fig. 15 is a graph that shows received power versus PER for the channel estimation method of Fig. 4, the single antenna channel estimation method, and the genie-aided antenna selection method for random CFO from a simulation using ZigBee in channel and DNLOS (not normalized to be unit power).

Fig. 16 is a graph that shows received power versus PER for the channel estimation method of Fig. 4, the single antenna channel estimation method, and the genie-aided antenna selection method for -200 KHz CFO from a simulation using ZigBee in channel and DNLOS (not normalized to be unit power).

Fig. 17 is a graph that shows received power versus PER for the channel estimation method of Fig. 4, the single antenna channel estimation method, and the genie-aided antenna selection method for +200 KHz CFO from a simulation using ZigBee in channel and DNLOS (not normalized to be unit power).

A method of generating channel estimations for a multi-antenna system in accordance with an embodiment of the invention is described with reference to a process flow diagram of Fig. 18. At block 1802, a relative channel with respect to first and second antennas is estimated using signals from the first and second antennas to derive a relative channel estimation. At block 1804, an antenna power for at least one of the first and second antennas is estimated using the signals from at least one of the first and second antennas. At block 1806, channel estimations for the first and second antennas are computed using the relative channel estimation and the antenna power for the at least one of the first and second antennas.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It can also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments of the invention may be implemented entirely in hardware or in an implementation containing both hardware and software elements. In embodiments that use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

**Claims**

1. A receiver for a multi-antenna system comprising:

   a detector configured to detect packets using signals received on a plurality of antennas; and
   a channel estimator configured to produce channel estimations based on the signals received on the plurality of antennas, the channel estimator being configured to:

   estimate a relative channel with respect to first and second antennas using signals from the first and second antennas to derive a relative channel estimation;
   estimate an antenna power for at least one of the first and second antennas using the signals from at least one of the first and second antennas; and
   compute channel estimations for the first and second antennas using the relative channel estimation and the antenna power for the at least one of the first and second antennas.

2. The receiver of claim 1, wherein the channel estimation for the first antenna equals the antenna power for the first antenna and the channel estimation for the second antenna equals the relative channel estimation.

3. The receiver of claim 1 or claim 2, wherein the channel estimator is configured to estimate an antenna power for each of the first and second antennas to derive first and second antenna power estimations for the first and second antennas.

4. The receiver of claim 3, wherein the channel estimator is configured to remove noise components from the first and second antenna power estimations using the relative channel estimation to derive relationships between the channel estimations for the first and second antennas and the antenna power estimations for the first and second antennas.

5. The receiver of claim 4, wherein the channel estimator is configured to compute the channel estimations for the first and second antennas based on the relationships between the channel estimations for the first and second antennas and the antenna power estimations of the first and second antennas.

6. The receiver according to any preceding claim, wherein the channel estimator is further configured to compute enhanced channel estimations for the first and second antennas based on an approximate maximum likelihood channel estimation process using the channel estimations for the first and second antennas as initial estimations.

7.   The receiver of claim 6, wherein the channel estimator is configured to compute the channel estimations for the first and second antennas until the end of an overlapping period after a packet is detected and starting the approximate maximum likelihood channel estimation process when the packet is detected.

8.   The receiver of claim 7, wherein the channel estimator is configured to use a preamble, syncword or access code detection to determine that a packet is detected.

9.   A method of generating channel estimations for a multi-antenna system, the method comprising:

estimating a relative channel with respect to first and second antennas using signals from the first and second antennas to derive a relative channel estimation;
estimating an antenna power for at least one of the first and second antennas using the signals from at least one of the first and second antennas; and
computing channel estimations for the first and second antennas using the relative channel estimation and the antenna power for the at least one of the first and second antennas.

10.   The method of claim 9, wherein the channel estimation for the first antenna equals the antenna power for the first antenna and the channel estimation for the second antenna equals the relative channel estimation.

11.   The method of claim 10, wherein estimating the antenna power for at least one of the first and second antennas includes estimating an antenna power for each of the first and second antennas to derive first and second antenna power estimations for the first and second antennas.

12.   The method of claim 11, further comprising removing noise components from the first and second antenna power estimations using the relative channel estimation to derive relationships between the channel estimations for the first and second antennas and the antenna power estimations for the first and second antennas.

13.   The method of claim 12, wherein computing the channel estimations for the first and second antennas includes computing the channel estimations for the first and second antennas based on the relationships between the channel estimations for the first and second antennas and the antenna power estimations of the first and second antennas.

14.   The method of any of claims 9 to 13, further comprising computing enhanced channel estimations for the first and second antennas based on an approximate maximum likelihood channel estimation process using the channel estimations for the first and second antennas as initial estimations.

15.   The method of claim 14, wherein computing the channel estimations for the first and second antennas is performed until the end of an overlapping period after a packet is detected and wherein the approximate maximum likelihood channel estimation process is started when the packet is detected.

FIG. 1

```
┌─────────────────────────────────────────────────────────────────────┐
│         RECEIVE SIGNALS FROM THE FIRST AND SECOND ANTENNAS            │──── 202
└─────────────────────────────────────────────────────────────────────┘
                                    │
                                    ▼
┌─────────────────────────────────────────────────────────────────────┐
│   ESTIMATE THE RELATIVE CHANNEL USING THE SIGNALS FROM THE FIRST AND  │──── 204
│      SECOND ANTENNAS TO DERIVE A RELATIVE CHANNEL ESTIMATION          │
└─────────────────────────────────────────────────────────────────────┘
                                    │
                                    ▼
┌─────────────────────────────────────────────────────────────────────┐
│   ESTIMATE THE POWER FROM EACH OF THE ANTENNAS USING THE RECEIVED     │──── 206
│    SIGNALS TO DERIVE ANTENNA POWER ESTIMATIONS FOR THE FIRST AND      │
│                         SECOND ANTENNAS                               │
└─────────────────────────────────────────────────────────────────────┘
                                    │
                                    ▼
┌─────────────────────────────────────────────────────────────────────┐
│       REMOVE THE NOISE COMPONENTS FROM THE ANTENNA POWER             │──── 208
│     ESTIMATIONS USING THE RELATIVE CHANNEL ESTIMATION TO DERIVE      │
│     RELATIONSHIPS BETWEEN CHANNEL ESTIMATIONS FOR THE FIRST AND      │
│     SECOND ANTENNAS AND THE ANTENNA POWER ESTIMATIONS FOR            │
│                 THE FIRST AND SECOND ANTENNAS                        │
└─────────────────────────────────────────────────────────────────────┘
                                    │
                                    ▼
┌─────────────────────────────────────────────────────────────────────┐
│     COMPUTE THE CHANNEL ESTIMATIONS FOR THE FIRST AND SECOND         │──── 210
│   ANTENNAS USING THE RELATIONSHIPS BETWEEN CHANNEL ESTIMATIONS FOR   │
│    THE FIRST AND SECOND ANTENNAS AND THE ANTENNA POWER ESTIMATION    │
│                 FOR THE FIRST AND SECOND ANTENNAS                    │
└─────────────────────────────────────────────────────────────────────┘
```

FIG. 2

```
┌─────────────────────────────────────────────────────────────────────────┐
│  PROVIDE THE CHANNEL ESTIMATIONS FOR THE FIRST AND SECOND ANTENNAS        │──── 302
└─────────────────────────────────────────────────────────────────────────┘
                                    │
                                    ▼
┌─────────────────────────────────────────────────────────────────────────┐
│       COMBINE SIGNALS FROM THE FIRST AND SECOND ANTENNAS TO              │──── 304
│                   DERIVE A COMBINED SIGNAL                                │
└─────────────────────────────────────────────────────────────────────────┘
                                    │
                                    ▼
┌─────────────────────────────────────────────────────────────────────────┐
│  APPLY THE PHASE OF THE COMBINED SIGNAL TO THE CURRENT SIGNAL FROM       │
│  THE FIRST ANTENNA AND AVERAGE THE CURRENT RESULT WITH THE PREVIOUS      │──── 306
│  RESULT TO DERIVE THE MAGNITUDE OF AN ENHANCED CHANNEL ESTIMATION        │
│                       FOR THE FIRST ANTENNA                               │
└─────────────────────────────────────────────────────────────────────────┘
                                    │
                                    ▼
┌─────────────────────────────────────────────────────────────────────────┐
│  APPLY THE PHASE OF THE COMBINED SIGNAL TO THE CURRENT SIGNAL FROM       │
│  THE SECOND ANTENNA AND AVERAGE THE CURRENT RESULT WITH THE              │──── 308
│  PREVIOUS RESULT TO DERIVE THE MAGNITUDE OF AN ENHANCED CHANNEL          │
│              ESTIMATION FOR THE SECOND ANTENNA                            │
└─────────────────────────────────────────────────────────────────────────┘
                                    │
                                    ▼
┌─────────────────────────────────────────────────────────────────────────┐
│  COMPUTE THE ENHANCED CHANNEL ESTIMATIONS FOR THE FIRST AND SECOND       │──── 310
│  ANTENNAS USING THE MAGNITUDES OF THE ENHANCED CHANNEL ESTIMATIONS       │
└─────────────────────────────────────────────────────────────────────────┘
```

FIG. 3

FIG. 4

FIG. 5

| BR | ACCESS CODE (68-72 BITS) | HEADER (54 BITS) | PAYLOAD (0-2790 BITS) | | | |
|---|---|---|---|---|---|---|

GFSK ← → | DPSK ← →

| EDR | ACCESS CODE (68-72 BITS) | HEADER (54 BITS) | GUARD TIME 4.75-5.25us | SYNC SEQ 11us | PAYLOAD (0-2790 BITS) | TRAILOR 2us |
|---|---|---|---|---|---|---|

| LE | PREAMBLE (1-2 OCTETS) | ACCESS ADDRESS (4 OCTETS) | PAYLOAD (2-258 OCTETS) | | | CRC (3 OCTETS) |
|---|---|---|---|---|---|---|

FEC BLOCK 1 (S=2) ← → | FEC BLOCK 2 (S=2 OR S=8) ← →

| LR | PREAMBLE (80us) | ACCESS ADDRESS (256US) | CI (16us) | TERM1 (24us) | PAYLOAD (N*8*S us) | CRC (24*S OCTETS) | TERM2 (3*S OCTETS) |
|---|---|---|---|---|---|---|---|

| 15.4 | PREAMBLE (4 OCTETS) | SFD (1 OCTET) | PHR (1 OCTET) | PAYLOAD | | |
|---|---|---|---|---|---|---|

FIG. 6

PREAMBLE

t5

t4

704

t3

702

t2

t1

**FIG. 7**

| SENSITIVITY<br>DC 10mV | SINGLE<br>ANTENNA | REFERENCE CHANNEL<br>ESTIMATION METHOD | CHANNEL ESTIMATION METHOD | |
|---|---|---|---|---|
| | FLAT<br>FADING | FLAT<br>FADING | FLAT<br>FADING | GAIN W.R.T GENIE AIDED<br>ANTENNA SELECTION |
| RAND CFO<br>[-225,255]KHz | -86.88 | -95.00 | -97.40 | 2.40 |
| ZERO CFO | -88.38 | -95.00 | -97.00 | 2.00 |
| CFO: -200 KHz | -87.46 | -95.53 | -97.00 | 1.47 |
| CFO: +200 KHz | -87.32 | -95.37 | -96.00 | 0.63 |

# FIG. 8A

EP 4 783 475 A1

| SENSITIVITY DC 10mV | SINGLE ANTENNA | CHANNEL ESTIMATION METHOD | | | |
|---|---|---|---|---|---|
| | FLAT FADING | FLAT FADING | GAIN W.R.T SINGLE ANTENNA | UNCODED THEORETICAL MRC GAIN | UNCODED THEORETICAL ANTENNA SELECTION GAIN |
| RAND CFO [-225,255]KHz | -86.88 | -97.40 | 10.52 | 11.50 | 10.00 |
| ZERO CFO | -88.38 | -97.00 | 8.62 | | |
| CFO: -200 KHz | -87.46 | -97.00 | 9.54 | | |
| CFO: +200 KHz | -87.32 | -96.00 | 8.68 | | |

FIG. 8B

fer_1ant_def_flat_config_zb_37Bytes_rp2_sweep_dc_10mV_ZeroCFO

Legend:
- 1 Rx: S = -88.38
- 2 Rx: GENIE AIDED ANTENNA SELECTION: S= -95.00, D=6.62
- 2 Rx: METHOD: S= -97.00, D=8.62

Y-axis: PER
X-axis: RECEIVED POWER (dBm)

FIG. 9

fer_1ant_def_flat_config_zb_37Bytes_rp2_sweep_dc_10mV_RandCFO

Legend:
- 1 Rx: S = -86.88
- 2 Rx: GENIE AIDED ANTENNA SELECTION: S= -95.00, D=8.12
- 2 Rx: METHOD: S= -97.40, D=10.52

PER (y-axis), RECEIVED POWER (dBm) (x-axis)

FIG. 10

EP 4 783 475 A1

FIG. 11

fer_1ant_def_flat_config_zb_37Bytes_rp2_sweep_dc_10mV_posCFO

Legend:
- 1 Rx: S = -87.32
- 2 Rx: GENIE AIDED ANTENNA SELECTION: S= -95.37, D=8.04
- 2 Rx: METHOD: S= -96.00, D=8.68

PER (y-axis)
RECEIVED POWER (dBm) (x-axis)

FIG. 12

EP 4 783 475 A1

| SENSITIVITY DC 10mV | SINGLE ANTENNA BT Rx | REFERENCE CHANNEL ESTIMATION METHOD | CHANNEL ESTIMATION METHOD | |
|---|---|---|---|---|
| | FLAT FADING | FLAT FADING | FLAT FADING | GAIN W.R.T GENIE AIDED ANTENNA SELECTION |
| RAND CFO [-225,255]KHz | -103.21 | -111.37 | -112.55 | 1.08 |
| ZERO CFO | -103.84 | -111.79 | -112.47 | 0.68 |
| CFO: -200 KHz | -103.00 | -111.00 | -112.00 | 1.00 |
| CFO: +200 KHz | -104.34 | -111.46 | -112.46 | 1.00 |

FIG. 13

FIG. 14

EP 4 783 475 A1

FIG. 15

EP 4 783 475 A1

fer_1ant_def_ds_config_zb_37Bytes_rp2_sweep_dc_10mV_RandCFO

FIG. 16

FIG. 17

ESTIMATE A RELATIVE CHANNEL WITH RESPECT TO FIRST AND SECOND
ANTENNAS USING SIGNALS FROM THE FIRST AND SECOND
ANTENNAS TO DERIVE A RELATIVE CHANNEL ESTIMATION ⌐1802

ESTIMATE AN ANTENNA POWER FOR AT LEAST ONE OF THE FIRST AND SECOND
ANTENNAS USING THE SIGNALS FROM AT LEAST ONE OF THE FIRST AND
SECOND ANTENNAS ⌐1804

COMPUTE CHANNEL ESTIMATIONS FOR THE FIRST AND SECOND ANTENNAS
USING THE RELATIVE CHANNEL ESTIMATION AND THE ANTENNA POWER FOR
THE AT LEAST ONE OF THE FIRST AND SECOND ANTENNAS ⌐1806

FIG. 18

Europäisches
Patentamt
European
Patent Office
Office européen
des brevets

# EUROPEAN SEARCH REPORT

**Application Number**

EP 26 15 4571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG Y-C ET AL: "NEW PHASE ADJUSTMENT AND CHANNEL ESTIMATION METHODS FOR RF COMBINING APPLICABLE IN MOBILE TERMINALS", WIRELESS PERSONAL COMMUNICATIONS. SPRINGER, DORDRECHT., NL, vol. 25, no. 03, 1 June 2003 (2003-06-01), pages 187-204, XP001162302, ISSN: 0929-6212, DOI: 10.1023/A:1024003609309 * page 1 - page 11 * * figures 1, 2 * | 1-15 | INV. H04B7/0404 H04B7/0456 H04B7/08 H04B17/318 H04L25/02 |
| X | US 2006/072607 A1 (KENT MARK [US] ET AL) 6 April 2006 (2006-04-06) * paragraph [0068] - paragraph [0117] * * figures 2-7 * | 1-15 | |
| X | US 2015/146584 A1 (WANG SHERWIN J [US] ET AL) 28 May 2015 (2015-05-28) * paragraph [0058] - paragraph [0064] * * figures 1-4 * | 1-15 | |
| A | GB 2 495 110 A (TOSHIBA RES EUROP LTD; TOSHIBA RES EUROP LTD [GB]) 3 April 2013 (2013-04-03) * page 4 - page 12 * | 1-15 | TECHNICAL FIELDS SEARCHED (IPC) H04B H04L |

The present search report has been drawn up for all claims

| Place of search | Date of completion of the search | Examiner |
|---|---|---|
| Munich | 26 May 2026 | Kokkinos, Titos |

EPO FORM 1503 03.82 (P04C01)

## ANNEX TO THE EUROPEAN SEARCH REPORT
## ON EUROPEAN PATENT APPLICATION NO.

EP 26 15 4571

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | | Publication date | Patent family member(s) | | Publication date |
|---|---|---|---|---|---|
| US 2006072607 | A1 | 06-04-2006 | US | 2006072607 A1 | 06-04-2006 |
| | | | US | 2009161690 A1 | 25-06-2009 |
| | | | US | 2011128878 A1 | 02-06-2011 |
| US 2015146584 | A1 | 28-05-2015 | NONE | | |
| GB 2495110 | A | 03-04-2013 | GB | 2495110 A | 03-04-2013 |
| | | | JP | 5596098 B2 | 24-09-2014 |
| | | | JP | 2013081173 A | 02-05-2013 |
| | | | US | 2013077716 A1 | 28-03-2013 |

EPO FORM P0459

For more details about this annex : see Official Journal of the European Patent Office, No. 12/82